# EUROPÄISCHE PATENTSCHRIFT

(11) **EP 1 324 451 B1**
(45) Veröffentlichungstag und Bekanntmachung des Hinweises auf die Patenterteilung: **02.11.2005**
(21) Anmeldenummer: 01130764.2
(22) Anmeldetag: 22.12.2001
(51) Int. Cl.: H02G 7/05

(54) **Anhängevorrichtung für eine elektrische Leitung**
Suspension device for an electrical line
Attelage pour une ligne électrique

(43) Veröffentlichungstag der Anmeldung: 02.07.2003
(73) Patentinhaber: Richard Bergner Elektroarmaturen GmbH & Co., 91126 Schwabach (DE)
(72) Erfinder: Rauch, Herbert, 91154 Roth-Bernlohe (DE)
(74) Vertreter: Tergau & Pohl Patentanwälte

(56) Entgegenhaltungen:
- EP-A- 0 425 905
- US-A- 3 163 706

## Beschreibung

Die Erfindung betrifft eine Aufhängevorrichtung für eine elektrische Leitung, insbesondere für ein Leiterseil einer Freileitung, mit einer aus zwei Schalenhälften ausgebildeten metallischen Hülse, durch die die elektrische Leitung im Montagezustand lose geführt ist und die mit einer Aufhängelasche verbunden ist, sowie mit einer Anzahl von helixförmig gewundenen Befestigungsstäben, die im Montagezustand um die Leitung und die Hülse gewunden sind.

Eine derartige Aufhängevorrichtung ist aus der EP 0 425 905 A2 zu entnehmen und wird auch als Hängeklemme bezeichnet. Sie dient zum Aufhängen eines Leiterseils an einer Tragkonstruktion eines Freileitungsmasts. Die Aufhängevorrichtung wird hierzu mit der Aufhängelasche an der Tragkonstruktion befestigt.

Aufhängevorrichtungen sind weiterhin zu entnehmen aus der DE-AS 23 00 672 sowie aus der US 2,722,393. Bei den hieraus bekannten Hängeklemmen ist das Leiterseil jeweils innerhalb einer Hülse aus einem gummielastischen Werkstoff eingeklemmt. Generell besteht bei den Hängeklemmen das Problem, dass das Leiterseil im Bereich der Hängeklemme aufgrund der relativ starren Befestigung starken Biegungen ausgesetzt ist, die das Leiterseil mechanisch stark belasten können.

Der Erfindung liegt die Aufgabe zugrunde, mit einer konstruktiv einfach ausgestalteten Aufhängevorrichtung eine sichere und zuverlässige Befestigung insbesondere eines Leiterseils einer Freileitung zu gewährleisten.

Die Aufgabe wird gemäß der Erfindung gelöst durch eine Aufhängevorrichtung mit den Merkmalen des Patentanspruchs 1. Die Aufhängevorrichtung weist eine mit einer Aufhängelasche verbundende metallische Hülse auf, durch die das Leiterseil im Montagezustand geführt ist. Die Hülse umgibt das Leiterseil im Montagezustand lose. Um die Hülse sind mehrere helixförmige Befestigungsstäbe gewunden.

Über die Befestigungsstäbe wird das Leiterseil fest in der Hülse gehalten, durch die es lediglich lose, also mit Spiel geführt ist. Versuche haben ergeben, dass in überraschender Weise ein Festklemmen des Leiterseils innerhalb der Hülse nicht erforderlich, vielmehr sogar nachteilig ist. Durch die lose Führung ist insbesondere eine vergleichsweise einfache Montage möglich.

Die helix- oder spiralförmig gewundenen Befestigungsstäbe weisen quer zur Längsrichtung des Leiterseils eine gewisse Elastizität auf, die ein wesentlicher Gesichtspunkt für eine reduzierte Biegebelastung des Leiterseils im Bereich der Aufhängevorrichtung ist. Die geringe Belastung des Leiterseils wird zudem unterstützt durch die lose Führung des Leiterseils durch die Hülse, da durch die lose Führung ein gewisses Spiel des Leiterseils relativ zur Hülse ermöglicht ist. Das Leiterseil ist also im Bereich der Hülse von der Hülse nicht geklemmt. Um diese lose Führung innerhalb der Hülse bei gleichzeitig sicherer Befestigung über die Befestigungsstäbe zu ermöglichen, besteht die Hülse aus Metall, also einem Material mit hoher Festigkeit, das der Hülse insgesamt eine so hohe Steifigkeit verleiht, dass sie dem von den Befestigungsstäben ausgeübten radialen Anpressdruck standhalten kann. Die Metallhülse hat auch den Vorteil, dass im Vergleich zu der Verwendung einer Kunststoffhülse bereits eine vergleichsweise geringe Anzahl von Befestigungsstäben für eine sichere Befestigung ausreicht.

Für die Funktion der sicheren Befestigung des Leiterseils ist daher das Zusammenwirken der Metallhülse mit hoher Festigkeit und der losen Führung des Leiterseils durch die Hülse maßgebend.

Weiterhin ist die Hülse zweiteilig mit zwei Schalenhälften ausgebildet, wobei jede der Schalenhälften randseitig zwei gegenüberliegend angeordnete Halbzapfen aufweist, die sich im Montagezustand mit den Halbzapfen der anderen Schalenhälfte komplementär zu einem jeweiligen Haltezapfen ergänzen. Die dadurch gebildeten zwei Haltezapfen sind also einander gegenüberliegend an der Randseite der Hülse ausgebildet. Diese beiden Haltezapfen greifen jeweils in eine ihnen zugeordnete Zapfenaufnahme der Aufhängelasche ein.

Diese Ausgestaltung ermöglicht eine besonders einfache Montage, indem die beiden Schalenhälften um das Leiterseil gelegt und durch Einstecken in die Zapfenaufnahme zusammengefügt und zusammengehalten werden. Die beiden Schalenhälften fallen also nicht mehr auseinander, so dass keine weiteren Verbindungsmittel vor dem Anbringen der Befestigungsstäbe notwendig sind. Im montierten Endzustand werden die beiden Schalenhälften dann zusätzlich durch die Befestigungsstäbe gegeneinander gepresst.

In einer bevorzugten Ausgestaltung umgibt die Hülse das Leiterseil unmittelbar und auch die Befestigungsstäbe sind unmittelbar um die Hülse gewunden. Die Aufhängevorrichtung kommt daher mit sehr wenigen Einzelteilen aus. Insbesondere sind keine Zwischen- oder Einlagen zwischen dem Leiterseil und der Hülse oder zwischen der Hülse und den Befestigungsstäben vorgesehen.

Vorzugsweise ist die Hülse doppelkonisch ausgebildet, d.h. ihr Außendurchmesser verringert sich in Richtung ihrer beiden Enden jeweils kontinuierlich und stetig. Durch diese Maßnahme wird ein weiches und sanftes Ankoppeln des Leiterseils an die Spiralstäbe im Übergangsbereich zwischen der Hülse und dem freien Leiterseil erhalten. Denn für eine ausreichende Haltekraft ist der durch die helixförmig gewundenen Spiralstäbe definierte Innendurchmesser an den Durchmesser des Leiterseils angepasst. Im Bereich der Hülse erfahren die gewundenen Spiralscheibe eine deutliche Aufweitung, d.h. ihr Innendurchmesser vergrößert sich. Dadurch ist ihre Rückstellkraft in radialer Richtung deutlich erhöht, was wiederum das Abbiegen des Seiles außerhalb der Hülse reduziert. Bei einem abrupten Übergang von einem großen Durchmesser im Hülsenbereich zu einem relativ geringen Durchmesser im Bereich des freien Leiterseils würde nämlich in diesem Übergangsbereich ein sehr hoher Anpressdruck von den Spiral- oder Befestigungsstäben auf das Leiterseil ausgeübt werden. Im Übergangsbereich würde die Befestigung über die Befestigungsstäbe daher nur eine geringe Elastizität quer zur Längsrichtung aufweisen, was unter Umständen zu einer hohen Biegebeanspruchung führen kann.

Im Hinblick auf eine möglichst einfache Montage durch Einstecken der Haltezapfen in die jeweilige Zapfenaufnahme liegen die Haltezapfen ohne Hinterschnitt in der Zapfenaufnahme ein.

Um ein unerwünschtes Herausrutschen der Haltezapfen aus der Zapfenaufnahme zu verhindern, ist in einer bevorzugten Weiterbildung die Aufhängelasche aus zwei Teillaschen gebildet, die zwischen sich einen Aufnahmeraum für die Hülse einschließen und die über ein, insbesondere lösbares Verbindungselement miteinander verbunden sind. Die beiden Teillaschen sind insbesondere jeweils als ein gebogenes Flachelement, insbesondere ein Flachstahl, ausgebildet. Als Verbindungselement dient beispielsweise eine Schraube, die bevorzugt oberhalb des Aufnahmeraums die beiden gebogenen Flachelemente flächig aneinander presst. Durch diese Ausgestaltung ist der Abstand zwischen den beiden Aufhängelaschen im Bereich des Aufnahmeraums, also die lichte Weite des Aufnahmeraums, fest eingestellt.

Im Hinblick auf eine besonders stabile Ausführung sind in bevorzugten Weiterbildungen die Hülse als ein geschmiedeter Metallkörper sowie die Aufhängelasche aus Stahl ausgebildet.

Ein Ausführungsbeispiel der Erfindung wird im Folgenden anhand der Zeichnungen näher erläutert. Es zeigen:
- Fig. 1: eine Seitenansicht einer Aufhängevorrichtung in Blickrichtung in Längsrichtung eines Leiterseils und
- Fig. 2: eine Seitenansicht der Aufhängevorrichtung nach Fig. 1 in Blickrich- tung quer zur Längsrichtung des Leiterseils.

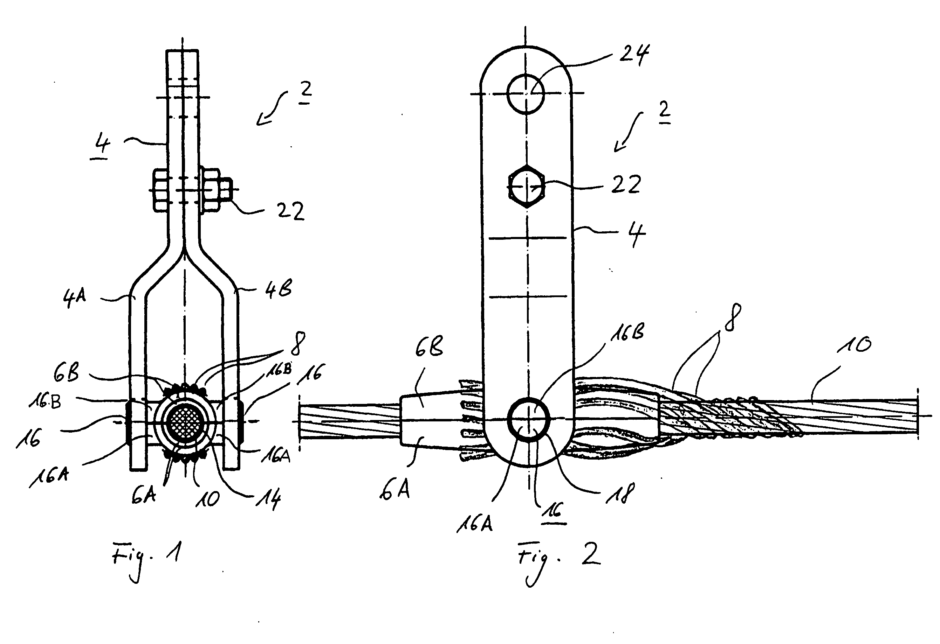

Die Aufhängevorrrichtung 2 umfasst eine aus zwei Teillaschen 4A,4B gebildete Aufhängelasche 4, eine Hülse 6 aus einem geschmiedeten Metallkörper sowie eine Anzahl von helixförmig gewundenen Befestigungsstäben 8. In Fig. 2 sind die Befestigungsstäbe 8 auf der linken Bildhälfte nicht durchgezeichnet, um einen besseren Blick auf die Hülse 6 frei zu geben. Im Montagezustand sind die Befestigungsstäbe 8 auf der linken Bildhälfte symmetrisch zu der rechten Bildhälfte geführt.

Die Aufhängevorrichtung 2 dient zum Aufhängen oder Befestigen einer elektrischen Leitung 10 an einer hier nicht näher dargestellten Tragstruktur insbesondere eines Freileitungsmastes. Die elektrische Leitung 10 ist insbesondere ein Leiterseil einer elektrischen Freileitung. Die Aufhängevorrichtung 2 kann jedoch gleichermaßen auch für ein sogenanntes Luftkabel verwendet werden. Als Luftkabel wird ein Daten- oder Nachrichtenkabel bezeichnet, das ebenso wie die Leiterseile einer Freileitung zwischen den Freileitungsmasten abgespannt ist. Moderne Luftkabel sind in der Regel als Lichtwellenleiter ausgebildet. Insbesondere bei solchen Luftkabeln müssen Querkräfte oder ein unzulässiges Biegen des Luftkabels vermieden werden, da ansonsten die optischen Übertragungseigenschaften beeinflusst werden und die Datenübertragung gedämpft oder unterbrochen wird.

Zur Befestigung und Aufhängung der Leitung 10 wird diese durch die Hülse 6 lose hindurchgeführt und anschließend werden um die Leitung 10 sowie um die Hülse 6 die helixförmig gewundenen Befestigungsstäbe 8 gewunden. Durch das Zusammenwirken der hochsteifen und hochfesten Hülse 6, das lose Hindurchführen der Leitung 10 durch die Hülse 6 sowie die Ankopplung der Leitung 10 an die Hülse 6 über die Befestigungsstäbe 8 ist ein sehr weiches und für die Leitung 10 belastungsfreies Ankoppeln an die Aufhängevorrichtung 2 erreicht.

Für die lose Führung weist die Hülse 6 einen Innendurchmesser auf, der größer ist als der Außendurchmesser der Leitung 10. Im Montagezustand bildet sich daher zwischen der Leitung 10 und der Hülse 6 ein Luftspalt 14 aus, der im Idealfall konzentrisch um die Leitung 10 gebildet ist. Der Luftspalt 14 ist in der Fig. 1 als schwarze Kreislinie dargestellt. Die Zentrierung der Leitung 10 wird durch die Anzahl der Befestigungsstäbe 8 bewirkt, die allseitig in radialer Richtung auf die Leitung 10 eine Kraft in Richtung zu der Mittenlängsachse der Hülse 6 ausüben. Die lose Führung und die Ausbildung des Luftspalts 14 ermöglichen eine gewisse Beweglichkeit der Leitung 10 innerhalb der Hülse 6. Aufgrund des weitgehend reibungsfreien Durchführens der Leitung 10 durch die Hülse 6 werden die Leitung 10 belastende Reibungseffekte zwischen Hülse 6 und Leitung 10 vermieden. Überraschend ist, dass zur Vermeidung dieser unerwünschten Reibungseffekte kein Festklemmen der Leitung 10 innerhalb der Hülse 6 erforderlich ist, wie dies bisher im Stand der Technik üblich ist, sondern dass vielmehr gerade die lose Führung geeignet ist. Zugleich wirkt sich die lose Führung im Hinblick auf eine Biegebeanspruchung der Leitung günstig aus, da die Leitung 10 innerhalb der Hülse 6 etwas flexibel gehalten ist und einen gewissen Krümmungsradius ausbilden kann.

Die Hülse 6 ist zudem doppelkonisch ausgebildet, verjüngt sich also zu ihren beiden in Längsrichtung 12 gegenüberliegenden Endseiten stetig auf einen geringeren Außendurchmesser als in der Hülsenmitte. Die Hülse weist dabei einen gleichbleibenden Innendurchmesser auf. Sie ist insgesamt rotationssymmetrisch um ihre Mittenlängsachse in Richtung der Längsrichtung 12 sowie spiegelsymmetrisch zu einer Mittenebene ausgebildet, wobei die Längsrichtung 12 die Flächennormale der Mittenebene angibt. Durch die doppelkonische Ausbildung der Hülse 6 ist im Übergangsbereich, in dem die Hülse 6 endet und die Leitung 10 frei weiterläuft, die von den Befestigungsstäben 8 aufgrund der Durchmesserverringerung auf die Leitung 10 ausgeübte Druckspitze möglichst gering gehalten.

Die Hülse 6 ist weiterhin zweiteilig aus zwei Schalenhälften 6A,6B ausgebildet. In der Mitte der Hülse 6 weist jede der Schalenhälften 6A,6B an beiden Randseiten jeweils einen Halbzapfen 16A,16B auf. Jeder dieser Halbzapfen 16A,16B ist als Halbzylinder ausgebildet, dessen Flachseite mit der Teilungsebene der beiden Schalenhälften 6A,6B bündig abschließt und dessen Zylinderachse senkrecht zur Längsrichtung 12 verläuft. Werden die beiden Schalenhälften 6A,6B zusammengefügt, so ergänzen sich jeweils zwei Halbzapfen 16A,16B zu einem Haltezapfen 16. Mit den Haltezapfen 16 wird die Hülse 6 in entsprechenden Zapfenaufnahmen gehalten, die jeweils endseitig in den beiden Teillaschen 4A,4B eingebracht sind.

Die beiden Teillaschen 4A,4B sind als gebogene Stahlbleche ausgeführt, so dass sie in ihrem oberen Bereich flächig aneinander liegen und im unteren Bereich einen Aufnahmeraum 20 definieren, in dem die Hülse 6 mit den Haltezapfen 16 gehalten ist. Im oberen Bereich der beiden Teillaschen 4A,4B oberhalb des Aufnahmeraums 20 sind diese über eine Schraube 22 flächig aneinander gepresst. Eine Aufweitung des Aufnahmeraums und ein Herausfallen der Hülse 6 ist dadurch vermieden. Am der Zapfenaufnahme 18 gegenüberliegenden Ende weist die Aufhängelasche 4 weiterhin eine Bohrung 24 auf, über die die Aufhängevorrichtung 2 an der Tragstruktur befestigbar ist.

### Bezugszeichenliste

- 2: Aufhängevorrichtung
- 4: Aufhängelasche
- 4A,4B: Teillaschen
- 6: Hülse
- 6A,6B: Schalenhälften
- 8: Befestigungsstäbe
- 10: elektrische Leitung
- 12: Längsrichtung
- 14: Luftspalt
- 16: Haltezapfen
- 16A,16B: Halbzapfen
- 18: Zapfenaufnahme
- 20: Aufnahmeraum
- 22: Schraube
- 24: Bohrung

## Patentansprüche

1. Aufhängevorrichtung (2) für eine elektrische Leitung (10), insbesondere für ein Leiterseil einer Freileitung, mit einer aus zwei Schalenhälften (6A, 6B) ausgebildeten Hülse (6) aus Metall, durch die die Leitung (10) im Montagezustand lose geführt ist und die mit einer Aufhängelasche (4) verbunden ist, sowie mit einer Anzahl von helixförmig gewundenen Befestigungsstäben (8), die im Montagezustand um die Leitung (10) und die Hülse (6) gewunden sind,
**dadurch gekennzeichnet,**
**dass** jede der Schalenhälften (6A;6B) randseitig zwei gegenüberliegend angeordnete Halbzapfen (16A;16B) aufweist, die sich im Montagezustand mit den Halbzapfen (16B;16A) der anderen Schalenhälfte (6B;6A) komplementär zu einem jeweiligen Haltezapfen (16) ergänzen, der in eine jeweilige Zapfenaufnahme (18) der Aufhängelasche (4) eingreift.

2. Aufhängevorrichtung (2) nach Anspruch 1,
**dadurch gekennzeichnet,**
**dass** die Hülse (6) die Leitung (10) unmittelbar umgibt und dass die Befestigungsstäbe (8) unmittelbar um die Hülse (6) gewunden sind.

3. Aufhängevorrichtung (2) nach Anspruch 1 oder 2,
**dadurch gekennzeichnet,**
**dass** die Hülse (6) doppelkonisch ausgebildet ist und ihr Außendurchmesser sich in Richtung ihrer beiden Enden jeweils verringert.

4. Aufhängevorrichtung (2) nach einem der vorhergehenden Ansprüche,
**dadurch gekennzeichnet,**
**dass** der Haltezapfen (16) ohne Hinterschnitt in der Zapfenaufnahme (18) einliegt.

5. Aufhängevorrichtung (2) nach einem der vorhergehenden Ansprüche,
**dadurch gekennzeichnet,**
**dass** die Aufhängelasche (4) aus zwei Teillaschen (4A,4B) gebildet ist, die zwischen sich einen Aufnahmeraum (20) für die Hülse (6) einschließen und über ein Verbindungselement (22) miteinander verbunden sind.

6. Aufhängevorrichtung (2) nach einem der vorhergehenden Ansprüche,
**dadurch gekennzeichnet,**
**dass** die Hülse (6) ein geschmiedeter Metallkörper ist.

7. Aufhängevorrichtung (2) nach einem der vorhergehenden Ansprüche,
**dadurch gekennzeichnet,**
**dass** die Aufhängelasche (4) aus Stahl ist.

## Claims

1. Suspension device (2) for an electrical line (10), in particular for a conductor cable of an overhead line, having a metal sleeve (6), which is formed from two shell halves (6A, 6B), through which the line (10) is passed loosely in the mounted state and which is connected to a suspension tab (4), and having a number of helically wound fixing rods (8) which, in the mounted state, are wound around the line (10) and the sleeve (6), **characterized in that** each of the shell halves (6A; 6B) has two oppositely arranged half-pins (16A; 16B) at the edge which, in the mounted state, comglete, in complementary fashion with the half-pins (16B; 16A) of the other shell halves (6B; 6A), a respective retaining pin (16) which engages in a respective pin receptacle (18) in the suspension tab (4).

2. Suspension device (2) according to Claim 1, **characterized in that** the sleeve (6) directly surrounds the line (10), and **in that** the fixing rods (8) are wound directly around the sleeve (6).

3. Suspension device (2) according to Claim 1 or 2, **characterized in that** the sleeve (6) is designed to be biconical, and its outer diameter is reduced in the direction of each of its two ends.

4. Suspension device (2) according to one of the preceding claims, **characterized in that** the retaining pin (16) lies in the pin receptacle (18) without a relief cut.

5. Suspension device (2) according to one of the preceding claims, **characterized in that** the suspension tab (4) is formed from two tab elements (4A, 4B) which between them enclose a receiving area (20) for the sleeve (6) and are connected to one another by means of a connecting element (22).

6. Suspension device (2) according to one of the preceding claims, **characterized in that** the sleeve (6) is a forged metal body.

7. Suspension device (2) according to one of the preceding claims, **characterized in that** the suspension tab (4) is made from steel.

## Revendications

1. Dispositif de suspension (2) pour une ligne électrique (10), en particulier pour un câble conducteur d'une ligne électrique aérienne, avec une cosse (6) en métal formée par deux moitiés de coque (6A, 6B), grâce auquel la ligne (10) est guidée de façon lâche dans l'état monté et qui est reliée à une éclisse de suspension (4), ainsi qu'avec une pluralité de tiges de fixation (8) enroulées hélicoïdalement, qui sont enroulées dans l'état monté autour de la ligne (10) et de la cosse (6),
**caractérisé en ce que**
chacune des moitiés de coque (6A; 6B) présente sur son bord deux demi-tourillons disposés en vis-à-vis (16A; 16B), qui rejoignent dans l'état monté les demi-tourillons (16B; 16A) de l'autre moitié de coque (6B; 6A) de façon complémentaire en un tourillon d'arrêt respectif (16), qui pénètre dans un évidement de tourillon (18) de l'éclisse de suspension (4).

2. Dispositif de suspension (2) selon la revendication 1, **caractérisé en ce que** la cosse (6) entoure immédiatement la ligne (10) et en que les tiges de fixation (8) sont enroulées immédiatement autour de la cosse (6).

3. Dispositif de suspension (2) selon la revendication 1 ou 2, **caractérisé en ce que** la cosse (6) est réalisée biconique et son diamètre externe diminue respectivement dans la direction de ses deux extrémités.

4. Dispositif de suspension (2) selon l'une des revendications précédentes, **caractérisé en ce que** le tourillon d'arrêt (16) pénètre dans l'évidement de tourillon (18) sans découpe arrière.

5. Dispositif de suspension (2) selon l'une des revendications précédentes, **caractérisé en ce que** l'éclisse de suspension (4) est constituée de deux éclisses partielles (4A, 4B), qui comprennent entre elles un espace creux (20) pour la cosse (6) et sont reliées l'une à l'autre par un élément de liaison (22).

6. Dispositif de suspension (2) selon l'une des revendications précédentes, **caractérisé en ce que** la cosse (6) est un corps métallique forgé.

7. Dispositif de suspension (2) selon l'une des revendications précédentes, **caractérisé en ce que** l'éclisse de suspension (4) est en acier.
